Europäisches Patentamt

**European Patent Office**

**Office européen des brevets**

(11) Publication number: **0 289 622**
**A1**

(12)

# EUROPEAN PATENT APPLICATION

published in accordance with Art. 158(3) EPC

(21) Application number: **87907337.7**

(22) Date of filing: **04.11.87**

Data of the international appli-
cation taken as a basis:

(86) International application number:
**PCT/JP 87/00849**

(87) International publication number:
**WO 88/03464 (19.05.88 88/11)**

(51) Int. Cl.⁴: **B 25 J 19/00**

(30) Priority: **13.11.86 JP 270619/86**

(43) Date of publication of application: **09.11.88**
**Bulletin 88/45**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **TORII, Nobutoshi Fuyou-Haitsu 308, 65-4, Takakura-cho Hachioji-shi, Tokyo 192 (JP)**
Inventor: **OTSUKA, Kazuhisa, Fanuc Hinoshataku 101 3-27, Tamadaira Hino-shi, Tokyo 191 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **ROTARY SHAFT DEVICE FOR INDUSTRIAL ROBOTS.**

(57) In the rotary shaft device for industrial robots, a skirt (3c) is provided so as to extend downward from the outer surface of a member (3) rotatable around an axis 0, and a collar (7b) opposed to the inner surface of the skirt is projected from a fixed member (2), whereby these two members are set in opposition to each other with a narrow clearance left there-between, to form a waterproof structure. Therefore, the entry of the dust and water droplets from the outside into the interior of the rotatable shaft can be prevented. This can prevent the corrosion, which is to be caused by the water droplets enter-ing the rotatable shaft, of the inner parts such as a motor.

3b
3 SWIVEL PORTION
3a TABLE
3c SKIRT PORTION
7b COLLAR PORTION
8 MOTOR
7a
7 HOLDER
6 CROSSED ROLLER BEARING
8a
2 SUPPORT PORTION
1

00289622

## DESCRIPTION

### INDUSTRIAL ROBOT SWIVEL SHAFT APPARATUS

Technical Field

This invention relates to an industrial robot swivel shaft apparatus in which the swivel shaft of an industrial robot is adapted to be swiveled by drive means installed therein.

Background Art

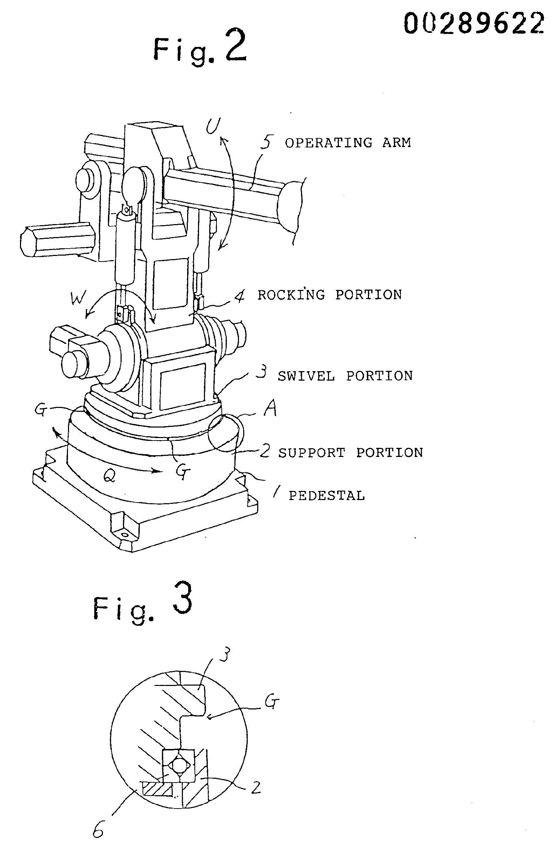

An industrial robot is either secured to a floor surface or wall surface or provided on a pedestal movable along a floor surface or wall surface. Fig. 2 is a perspective view illustrating an example of an articulated industrial robot having a pedestal secured to a floor surface.

In Fig. 2, numeral 1 denotes a pedestal secured to a floor surface or the like at a predetermined location. A support portion 2 which is the stationary side of a $\theta$ shaft is provided on the upper part of the pedestal 1, and a swivel portion 3 which is the swiveling side of the $\theta$ shaft and capable of turning through a predetermined rotational range is mounted on the upper part of the support portion 2. A rocking portion 4 having a working arm 5 at its upper part is mounted on the swivel portion 3 and is capable of rocking through a predetermined angle W. A wrist portion, not shown, is provided at the distal end of the working arm 5 and is adapted to bend up and down through a predetermined angle U relative to the rocking portion 4.

Fig. 3 is a sectional view of a portion indicated by A in Fig. 2 and shows the swivel portion in a state resting on the upper part of the support portion 2 via a crossed roller bearing 6. When the swivel portion 3 is rotatively driven by the driving force from a drive unit, not shown, the swivel portion 3 turns smoothly on the upper part of the support portion 2 by the action of the crossed roller bearing 6.

Since an industrial robot thus constructed is used, for example, to supply a machine tool with workpieces, minute machining scraps, machining fluids and the like which scatter during machining enter through a gap G and directly penetrate a peripheral portion between the swivel portion 3 and support portion 2, as shown in Fig. 3, and minute particles of foreign matter clinging to the robot or drops of water tend to penetrate through the gap G when the industrial robot is washed or when the location at which the robot is installed is cleaned. Moisture and foreign matter that have penetrated the interior of the support portion 2 impede the operation of the crossed roller bearing 6 and impair an accurate swiveling operation.

Furthermore, if a large amount of water should happen to enter through the gap G, the internal mechanism of the support portion 2 may rust, causing the swivel drive means installed therein to malfunction.

## Disclosure of the Invention

The present invention has been devised to solve the foregoing problems and its object is to provide an industrial robot swivel shaft apparatus in which water is prevented from penetrating the interior through a gap between the swiveling and stationary sides of the industrial robot.

In accordance with the present invention, there is provided an industrial robot swivel shaft apparatus having a support portion for supporting an industrial robot, a swivel portion supported by the support portion for swiveling thereon, and bearing means interposed between the support portion and the swivel portion, characterized in that an upstanding portion is formed in a passage, which is directed from the outer side of a gap between the support portion and the swivel portion to the inner side thereof, by a skirt portion formed on and depending from an outer circumferential surface of the swivel portion and a collar portion projectingly formed at an inner surface of the skirt portion so as to correspond thereto, water being prevented from penetrating the gap.

Thus, in the industrial robot swivel shaft apparatus of the present invention, a swiveling-side member having the depending skirt portion and a stationary-side member having the collar portion corresponding to the shape of the inner surface of the skirt portion are made to oppose each other at the gap

00289622

formed between the swivel shaft and the support portion at the periphery thereof, and a vertical passage portion is provided to form a waterproof structure. Thus, dust, water droplets and the like will not penetrate the interior of the apparatus from the outside.

Brief Description of the Drawings

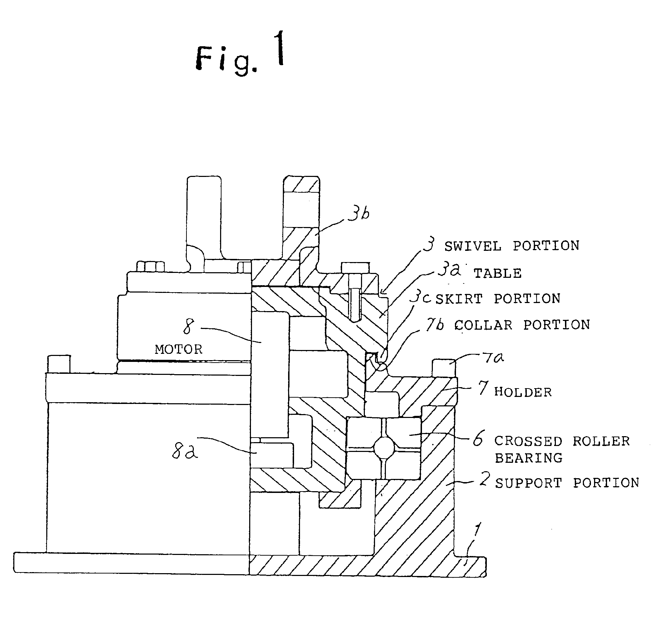

Fig. 1 is a side view, partially cut away, illustrating an embodiment of the present invention, Fig. 2 is a perspective view illustrating an example of an articulated industrial robot having a pedestal secured to a floor surface, and Fig. 3 is a partial sectional view illustrating a portion of Fig. 2.

Best Mode for Carrying Out the Invention

An embodiment of the present invention will now be described in detail with reference to the drawings.

Fig. 1 is a side view, partially cut away, illustrating an embodiment of the present invention, in which portions identical with those shown in Figs. 2 and 3 are designated by like reference characters and are not described again.

In Fig. 1, the outer circumferential surface and the bottom surface of the crossed roller bearing 6 are fitted into a stepped portion formed on the inner side of a circumferential support portion 2, and the bearing is fixedly secured to the support portion 2 by a holder 7 tightened by a holder screw 7a from a direction at the circumference of the upper surface of the bearing.

00289622

-5-

A W shaft lower member 3b supporting the rocking portion (not shown) at the upper part thereof is attached to a table 3a of the swivel portion 3. A motor 8 serving as a source of power for rotatively driving the swivel portion 3 is attached to the center of the table via a speed reducer 8a. The table 3a has a lower circumferential surface formed to include an engaging stepped portion which engages the inner peripheral surface and upper surface of the crossed roller bearing 6, and is placed on the crossed roller bearing 6. Owing to the action of the crossed roller bearing 6, the swivel portion 3 is supported on the support portion 2 and turns smoothly when the θ shaft is turned.

The peripheral portion of the table 3a above the portion where it engages the crossed roller bearing 6 is formed to have a depending skirt portion 3c. The innermost peripheral portion of the holder 7 is provided with an upwardly projecting collar portion 7b. An upstanding portion is formed in a passageway directed from the outer side to the inner side of a gap between the skirt portion 3c and collar portion 7b. The gap is maintained at a predetermined minute clearance so that the skirt portion 3c and collar portion 7b will not contact each other when the θ shaft turns.

The operation of the present embodiment will now be described. A driving force from the motor 8 is

00289622

transmitted to the swivel portion 3 via the speed reducer 8a, thereby turning the θ shaft. Since the table 3a is placed on the inner peripheral portion of the crossed roller bearing 6, the table turns smoothly on the support portion 2. During this rotation, the small clearance is maintained between the skirt portion 3c provided on the table 3a and the collar portion 7b provided on the holder 7 so that the table may be driven smoothly without contact between the skirt portion and collar portion.

When the industrial robot is washed or the floor surface at the site of installation is cleaned, dust or water droplets will be shut out from the interior of the apparatus at cleaning since the clearance between the skirt portion 3c and collar portion 7b is small and the vertical gap has the upstanding portion directed from the outer side to the inner side.

Though the embodiment of the present invention has been described for a case where the robot is installed on a floor surface, the invention is not limited to this arrangement, for the robot can be installed on a wall surface or on an inclined mounting surface. The present invention can be modified in various ways without departing from the scope of the claims.

Industrial Applicability

The industrial robot swivel shaft apparatus of the present invention can be applied to a robot which has a swivel shaft and which is secured to a floor or wall

00289622

-7-

surface, or to an articulated or cylindrical coordinate-type robot provided on a pedestal movable along a floor surface or wall surface.

CLAIMS:

1.    An industrial robot swivel shaft apparatus having a support portion for supporting an industrial robot, a swivel portion supported by the support portion for swiveling thereon, and bearing means interposed between the support portion and the swivel portion, the apparatus comprising:

a skirt portion formed on and depending from an outer circumferential surface of said swivel portion;

a collar portion projectingly formed at an inner surface of the skirt portion so as to correspond thereto; and

an upstanding portion formed in a passage directed from the outer side to an inner side in a gap between said support portion and said swivel portion.

2.    An industrial robot swivel shaft apparatus according to claim 1, characterized in that said bearing means is a crossed roller bearing.

3.    An industrial robot swivel shaft apparatus according to claim 1, characterized in that a drive mechanism for driving said swivel portion is provided in said support portion.

00289622

# Fig. 1

3b

3 SWIVEL PORTION

3a TABLE

3c SKIRT PORTION

7b COLLAR PORTION

7a

7 HOLDER

6 CROSSED ROLLER BEARING

2 SUPPORT PORTION

8

MOTOR

8a

1

00289622

# Fig. 2

5 OPERATING ARM

U

4 ROCKING PORTION

W

3 SWIVEL PORTION

A

2 SUPPORT PORTION

G

Q G

1 PEDESTAL

# Fig. 3

3

G

2

6

# INTERNATIONAL SEARCH REPORT 00289622

International Application No **PCT/JP87/00849**

## I. CLASSIFICATION OF SUBJECT MATTER (if several classification symbols apply, indicate all) 3

According to International Patent Classification (IPC) or to both National Classification and IPC

Int.Cl⁴    B25J19/00

## II. FIELDS SEARCHED

### Minimum Documentation Searched 4

| Classification System | Classification Symbols |
|---|---|
| IPC | B25J19/00, 9/06 |

### Documentation Searched other than Minimum Documentation to the Extent that such Documents are Included in the Fields Searched 5

| | |
|---|---|
| Jitsuyo Shinan Koho | 1926 - 1987 |
| Kokai Jitsuyo Shinan Koho | 1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 61-182792 (Fanuc Ltd.) 15 August 1986 (15. 08. 86) (Family: none) | 1-3 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 3 | Date of Mailing of this International Search Report 2 |
|---|---|
| January 7, 1988 (07. 01. 88) | January 25, 1988 (25. 01. 88) |

| International Searching Authority 1 | Signature of Authorized Officer 20 |
|---|---|
| Japanese Patent Office | |

Form PCT/ISA/210 (second sheet) (October 1977)